# EUROPEAN PATENT APPLICATION

(11) **EP 3 056 471 A1**
(43) Date of publication of application: **17.08.2016**
(21) Application number: 15155053.0
(22) Date of filing: 13.02.2015
(51) Int. Cl.: C01G 19/00

(54) **Process for producing indium-, gallium-, metal- and oxygen-containing particles**

(71) Applicant: BASF SE, 67056 Ludwigshafen am Rhein (DE)
(72) Inventor: Schmidt, Sabine, 64285 Darmstatdt (DE); Koenig, Rene, 67435 Neustadt (DE); Hemgesberg, Maximilian, 67663 Kaiserslautern (DE); Kaelblein, Daniel, 68163 Mannheim (DE); Waldmann, Daniel, 67245 Lambsheim (DE); Eickemeyer, Felix, 69118 Heidelberg (DE)
(74) Representative: BASF IP Association

(57) **Abstract**

The present invention is in the field of processes for producing indium, gallium, metal and oxygen containing particles, in particular spray-pyrolysis processes. In particular, the present invention relates to a process for producing particles comprising
(a) atomizing a liquid mixture comprising an In-comprising compound, a Ga-comprising compound and an M-comprising compound, wherein M is Zn or Sn,
(b) heating the atomized liquid to a temperature of at least 800 °C.

## Description

The present invention is in the field of processes for producing indium, gallium, metal and oxygen containing particles, in particular spray-pyrolysis processes.

Amorphous indium-gallium-zinc-oxide (a-IGZO) is an attractive channel material for thin-film transistors (TFT), which are the centerpiece of all kinds of modern active-matrix flat panel displays (FPD). Compared to amorphous hydrogenated Silicon (a-Si:H) a-IGZO offers a ten to fifty times higher carrier mobility. Hence, it allows for the production of higher-resolution, higher-brightness displays, which at the same time consume much less power than their a-Si:H counterparts. Typically, a-IGZO is processed by sputtering into transistors. However, sputtering requires sophisticated laser and vacuum technology. Also, a lot of this valuable material is lost in the apparatus. An alternative approach is the production of particles which can be formulated into inks with which transistors can be produced.

US 2013 / 0 126 344 A1 discloses a process for producing IGZO nanoparticles by precipitation of precursors from an aqueous solution and subsequent sintering.

It was an object of the present invention to provide an easy and efficient process for the production of indium-, gallium-, metal- and oxygen-containing particles with few process steps. It was further aimed at a process which provides good control over the stoichiometry of the particles and little or no adjustments of the process parameters upon change of the particle stoichiometry. Another object was to provide a process for producing particles with high electron mobility and a high on-off ratio in field-effect transistors.

These object were achieved by a process for producing particles comprising
(a) atomizing a liquid mixture comprising an In-comprising compound, a Ga-comprising compound and an M-comprising compound, wherein M is Zn or Sn,
(b) heating the atomized liquid to a temperature of at least 500 °C.

The present invention further relates to particles comprising In, Ga, a metal which is Zn or Sn, and O wherein the particles have a particle size of 1 to 100 nm and a BET surface area of at least 50 m²/g.

The present invention further relates to an ink comprising the particles according to the present invention.

The present invention further relates to the use of the particles according to the present invention for the preparation of an electronic device.

The present invention further relates to an electronic device comprising the particles according to the present invention.

Preferred embodiments of the present invention can be found in the description and the claims. Combinations of different embodiments fall within the scope of the current invention.

According to the present invention a liquid mixture is atomized comprising an In-comprising compound, a Ga-comprising compound and an M-comprising compound, wherein M is Zn or Sn. The mixture needs to be liquid at a temperature below the decomposition temperature of the mixture. If the mixture is not liquid at room temperature it needs to be heated above its melting point before being atomized. Preferably the mixture is liquid at room temperature, i.e. 20 °C, and normal pressure, i.e. 1013 mbar. The liquid mixture is preferably homogeneous, e.g. a clear melt or solution, when atomized.

The liquid mixture comprises an In-comprising compound, a Ga-comprising compound and an M-comprising compound, wherein M is Zn or Sn, which stands for indium-comprising compound, gallium-comprising compound, a zinc- or tin-comprising compound. Preferably M in the M-comprising compound is Zn.

A wide variety of In-, Ga-, Zn- or Sn-comprising compound can be chosen. These include nitrates; nitrites; sulfates; methylsulfonate; trifluoromethylsulfonate; toluenesulfonate; sulfite; halogenides like fluoride, chloride, bromide, iodide; halogenates like chlorate, bromate, iodate; perhalogenides like perchloride, perbromide, periodide; pseudohalogenides like cyanide, cyanate, thiocyanate, isocyanide, isocyanate; phosphates like orthophosphate, hydrogenphosphate, dihydrogenphosphate; phosphites; phosphides; carbonates; bicarbonates; carboxylates like acetate, trifluoroacetate, proprionate; alkoxylates like methanolate, ethanylate, *iso-*propanolate, butanolate, *tert*-butanolate; complexes with acetylacetonate derivatives such as acetyl acetonate, trifluoroacetylacetonate, 2,2,6,6-tetramethyl-3,5-heptanedionate; or complexes with cyclopentadienes. Nitrates and complexes with acetylacetonate or alkoxylates are preferred.

It is possible that all In-, Ga-, Zn- or Sn-comprising compounds contain the same anions or different ones. The molar ratio of the In-, Ga-, Zn- or Sn-comprising compounds contained in the mixture is generally equal or about equal to the molar ratio in the final particles. The liquid mixture can comprise one or more than one In-comprising compound, it can independently comprise one or more than one Ga-comprising compounds, and it can independently comprise one or more than one M-comprising compound. Preferably the liquid mixture comprises one In-comprising compound, one Ga-comprising compound and one M-comprising compound.

The In-, Ga-, Zn- or Sn-comprising compounds should be of high purity to achieve best results. High purity in the context of the present invention means that each compound contains 5 % or less impurities, preferably 1 % or less, in particular 0.1 % or less. However, trace impurities such as Na salts or water can hardly be avoided.

Preferably, the liquid mixture further comprises a solvent, in particular if all In-, Ga-, Zn- or Sn-comprising compounds are solid and cannot easily be melted. The solvent can be chosen from a wide variety of solvents. These include water, aliphatic alcohols like methanol, ethanol, iso-propanol, butanol, ethylene glycole, propylene glycol, butanediol; ethers like diethyl ether, methyl-*tert*-butylether, tetrahydrofurane, dioxane; ketones like acetone, methylethylketone, cyclopentanone; carboxylic acids like acetic acid, propionic acid; esters like ethyl acetate; lactones like 4-butyrolactone; organic carbonates like diethylcarbonate, ethylene carbonate, vinylenecarbonate; aromatic hydrocarbons like benzene, toluene, xylene, mesitylene, ethylbenzene, styrene. Aprotic solvents are preferred, in particular non-polar solvents with a dielectric constant at 0 °C of 15 or less. Aromatic hydrocarbons are preferred. Particularly preferred are solvents with a boiling point at normal pressure of at least 100 °C. Also preferred are flammable solvents, in particular those with high heats of combustion, i.e. more than 1000 kJ/mol at room temperature and normal pressure.

Preferably the metal concentration, i.e. the sum of the concentration of In, Ga and M, in the liquid mixture is 0.01 to 10 mol/l, more preferably 0.03 to 3 mol/l, in particular 0.1 to 1 mol/l. The concentrations refer to room temperature and normal pressure.

According to the present invention the liquid mixture is atomized. Atomization can be effected for example by spraying the liquid mixture through a nozzle, by electrospraying, by using a rotating disc atomizer or by the action of ultrasound. Spraying through a nozzle is preferred. Upon atomization an aerosol is formed containing droplets of the liquid mixture. These droplets preferably have a size of 100 nm to 500 µm, in particular 1 to 50 µm.

According to the present invention the atomized liquid mixture is heated to a temperature of at least 800 °C, preferably at least 1000 °C, in particular at least 1200 °C. Usually, the temperature does not exceed 3000 °C. The temperature refers to the hottest position the atomized liquid mixture can reach. Preferably the heating takes at maximum 1 s, more preferably at maximum 0.1 s.

Preferably, the In-comprising compound, the Ga-comprising compound and the M-comprising compound cross a combustion zone. This means that the Ga-comprising compound and the M-comprising compound are in close proximity to a combustion process. This can be accomplished in various ways. It is possible to ignite the atomized liquid mixture, for example by a flame of a combustible gas. This is particularly useful if the liquid mixture has a sufficient heat of combustion. It is also possible to mix the atomized liquid mixture with a flammable gas to form a flammable aerosol and ignite this aerosol. It is furthermore possible that the atomized mixture enters the zone of a flame of a combustible gas. Any combination of these possibilities is also conceivable. Preferably, the liquid mixture contains a flammable solvent and is mixed with a combustible gas after atomization.

The combustible gas can be alkanes such as methane, ethane, propane, butane; alkenes such as ethylene, propylene, butylene; alkynes such as acetylene, propyne, butyne; or mixtures thereof, in particular natural gasoline, gasoline, kerosene, naphtha. The flow of the combustible gas is preferably from 0.01 to 1 Nm³/h which stands for cubic meters under normal conditions, i.e. 1013 mbar and 25 °C, per hour, more preferably 0.02 to 0.5 Nm³/h. The ratio of combustible gas to the liquid mixture is preferably 0.02 to 3 m³/l, more preferably 0.05 to 1 m³/l.

For the combustion process oxygen is needed. Normally, air is used as oxygen source, but it is also possible to use pristine oxygen or nitrous oxide (N₂O). Preferably, the oxygen source is mixed with the combustible gas and/or the atomized liquid mixture before ignition. If the oxygen source is mixed with the atomized liquid mixture, the weight ratio of oxygen source to atomized liquid mixture is preferably 10:1 to 1:1, in particular 5:1 to 2:1. The mixing of oxygen source and liquid mixture is preferably done upon atomization by using a nozzle with a two-component jet.

Upon heating the atomized liquid particles comprising In, Ga, a metal which is Zn or Sn, and O are formed. These particles are preferably cooled down rapidly after heating. This can be done e.g. by a stream of a cold gas, such as air or nitrogen. The particles can be collected for example by a cyclone, by a filter, or by an electric field, preferably by a cyclone.

The present invention also relates to particles comprising In, Ga, a metal which is Zn or Sn, and O wherein the particles have a particle size of 1 to 100 nm and a BET surface area of at least 50 m²/g. Often, the particles form loose aggregates, preferably in the form of fractal aggregates. Sometimes these fractal aggregates are intergrown. The aggregates can be separated by conventional techniques such as ultrasonic dispersion or mixing, for example with a Scandex® disperser. The particle size is typically measured by dynamic light scattering according to ISO 22412:2008 and reported as weight average value d50. Preferably the particle size is 2 to 80 nm, in particular 3 to 50 nm, such as 5 to 20 nm. The polydispersity (d90-d10)/d50 is usually in the range of 0.2 to 0.8, preferably 0.3 to 0.5.

The BET surface area is usually measured according to DIN ISO 9277 (Jan. 2014), wherein the static volumetric method employing nitrogen as absorbant is preferably used. Preferably the BET surface area is at least 70 m²/g, more preferably at least 90 m²/g, in particular at least 120 m²/g. Usually it does not exceed 500 m²/g.

Preferably, the particles particles comprise a compound of general formula (I):

InₐGa_{b}M_{c}Oₓ (I)

wherein M is Zn or Sn, more preferably Zn,
a = 0.1 to 1, more preferably 0.5 to 1,
b = 0.1 to 1, more preferably 0.5 to 1,
c = 0.1 to 1, more preferably 0.5 to 1,
x = 0.4 to 4, more preferably 2 to 4,
and the compound of general formula (I) is neutrally charged.

In particular the particles comprise the compound InGaZnO₄.

Preferably the particles are amorphous or microcrystalline. Amorphous or microcrystalline in the context of the present invention means that the most intense peak in a wide-angle X-ray diffractogram of a particle sample is not more than 10 % of the intensity of the same peak in a wide-angle X-ray diffractogram obtained from a perfectly crystalline reference sample, more preferably not more than 5 %, in particular not more than 2 %. If the particles are microcrystalline, the crystallite size as derived from the X-ray diffractogram is preferably 4 to 20 nm, more preferably 6 to 16 nm, in particular 8 to 12 nm.

Preferably the particles are non-spherical. Non-spherical in the context of the present invention means that on average the longest dimension divided by the shortest dimension of a particle is at least 1.2, for example 1.2 to 2.

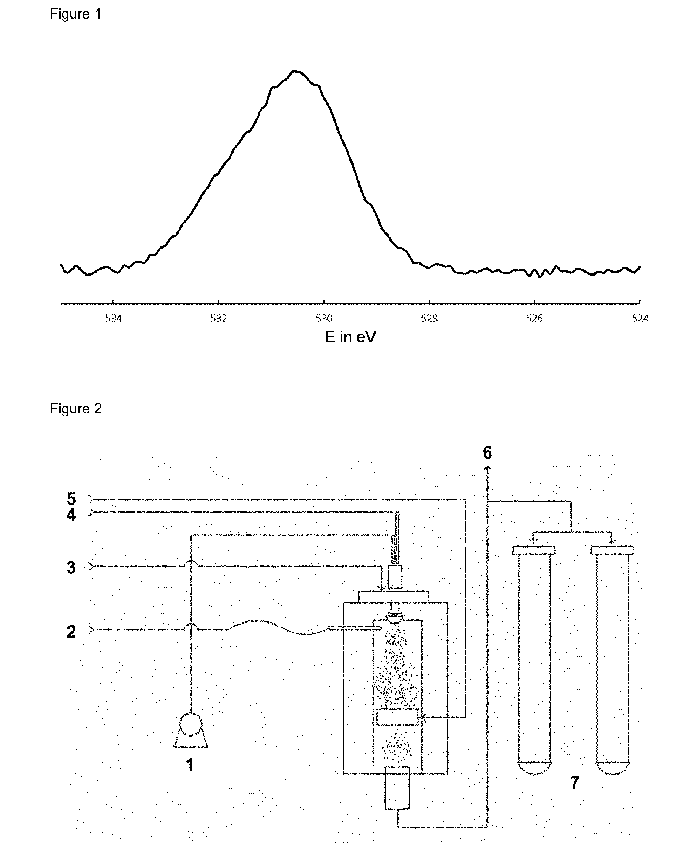

Preferably the particles bear OH groups on their surface, which means that they bear hydroxyl groups on their surface. The presence of OH groups on the particle surface can be determined by the presence of the characteristic peak at 531 eV in X-ray photoelectron spectroscopy (XPS). A typical XPS of particles bearing OH groups on their surface is depicted in figure 1. As usual for XPS the y-axis shows the intensity of the peak in arbitrary units.

The particles according to the present invention are well suited for the use in electronic elements, preferably transistors such as thin film transistors (TFT). The particles act as semiconductor in the channel of the transistor. They have a high charge-carrier mobility and a high on-off ratio.

### Examples

### Example 1

An In-comprising compound, a Ga-comprising compound and a Zn-comprising compound were dissolved in a solvent and fed through a nozzle at the top a laboratory reactor schematically shown in figure 2. The reactor is made of stainless steel with an inner insulation out of aluminum silica. The liquid mixture (1) was atomized into small droplets (about 40 µm) with air (4). Ignition of the droplets was accomplished via an assistant flame which is operated with air and ethylene (3) and itself ignited by an electrical igniter (2). At the lower end of the reactor the hot exhaust gas containing the particles was rapidly cooled down by nitrogen (5) at a flow rate of 50 m³/h. The exhaust gas (6) was released and the particles were collected by a filter bag (7) made of glass and PTFE with a surface area of one square meter. The parameters were varied according to table 1. The concentration refers to the total moles of metal atoms with regard to the solution.

**Table 1**

| No | Solvent | In:Ga:Zn molar ratio | In-, Ga- and Zn-comprising compound | Concentration [mol/l] | Flow rate of liquid mixture [ml/h] | Air flow total [m³/h] | Ethylene flow rate Nm3/h [Nm³/h] |
|---|---|---|---|---|---|---|---|
| 1.1 | Acetic acid | 2:1:2 | In(NO₃)₃ | 0.015 | 400 | 6.5 | |
| | | | Ga(NO₃)₃ | | | | |
| | | | Zn(NO₃)₂ | | | | |
| 1.2 | Acetic acid | 2:1:2 | In(NO₃)₃ | 0.010 | 300 | 6.5 | 0.25-0.35 |
| | | | Ga(NO₃)₃ | | | | |
| | | | Zn(NO₃)₂ | | | | |
| 1.3 | Acetic acid | 2:1:2 | In(NO₃)₃ | 0.010 | 300 | 6.5 | 0.025 - 0.035 |
| | | | Ga(NO₃)₃ | | | | |
| | | | Zn(NO₃)₂ | | | | |
| 1.4 | Acetic acid | 2:1:2 | In(NO₃)₃ | 0.010 | 520 | 6.5 | 0.25-0.35 |
| | | | Ga(NO₃)₃ | | | | |
| | | | Zn(NO₃)₂ | | | | |
| 1.5 | Acetic acid | 2:1:2 | In(NO₃)₃ | 0.010 | 400 | 6.5 | 0.25-0.35 |
| | | | Ga(NO₃)₃ | | | | |
| | | | Zn(NO₃)₂ | | | | |
| 1.6 | Acetic acid | 2:1:2 | In(NO₃)₃ | 0.007 | 520 | 6.5 | 0.25-0.35 |
| | | | Ga(NO₃)₃ | | | | |
| | | | Zn(NO₃)₂ | | | | |
| 1.7 | Xylene | 2:1:2 | In(acac)₃ | 0.010 | 400 | 6.5 | 0.25-0.35 |
| | | | Ga(acac)₃ | | | | |
| | | | Zn(acac)₂ | | | | |
| 1.8 | Xylene | 2:1:2 | In(acac)₃ | 0.010 | 400 | 6.5 | 0.25-0.35 |
| | | | Ga(acac)₃ | | | | |
| | | | Zn(acac)₂ | | | | |
| 1.9 | Xylene | 2:1:2 | In(acac)₃ | 0.010 | 400 | 6.0 | 0.25-0.35 |
| | | | Ga(acac)₃ | | | | |
| | | | Zn(acac)₂ | | | | |
| 1.10 | Xylene | 2:1:2 | In(acac)₃ | 0.007 | 400 | 6.0 | 0.25-0.35 |
| | | | Ga(acac)₃ | | | | |
| | | | Zn(acac)₂ | | | | |
| 1.11 | Xylene | 2:1:2 | In(acac)₃ | 0.007 | 400 | 6.0 | 0.25-0.35 |
| | | | Ga(acac)₃ | | | | |
| | | | Zn(acac)₂ | | | | |
| 1.12 | Xylene | 2:1:2 | In(acac)₃ | 0.007 | 300 | 6.0 | 0.25-0.35 |
| | | | Ga(acac)₃ | | | | |
| | | | Zn(acac)₂ | | | | |
| 1.13 | Xylene | 2:1:2 | In(acac)₃ | 0.010 | 400 | 6.0 | 0.025 - 0.035 |
| | | | Ga(acac)₃ | | | | |
| | | | Zn(acac)₂ | | | | |

### Example 2

Particles were formed analogously to example 1, but in a reactor which differs from the one used in example 1 in that it is water-cooled and has a larger inner space. Furthermore, the assistant flame was operated with natural gas. The liquid mixture was mixed with 3 kg/g oxygen upon atomization in the nozzle, the flow rate of the cooling nitrogen was 45 kg/h. The parameters were varied according to table 2.

**Table 2**

| No. | Solvent | In:Ga:Zn molar ratio | In-, Ga- and Zn-comprising compound | Concentration [mol/l] | Flow rate of liquid mixture [ml/h] | Assistant flame | |
|---|---|---|---|---|---|---|---|
| | | | | | | Natural gas [kg/h] | Oxygen [kg/h] |
| 2.1 | Acetic Acid | 1:1:1 | In(NO₃)₃ | 0.050 | 1000 | 0.100 | 0.40 |
| | | | Ga(NO₃)₃ | | | | |
| | | | Zn(NO₃)₂ | | | | |
| 2.2 | Acetic Acid | 1:1:1 | In(NO₃)₃ | 0.050 | 1000 | 0.150 | 0.60 |
| | | | Ga(NO₃)₃ | | | | |
| | | | Zn(NO₃)₂ | | | | |
| 2.3 | Acetic Acid | 1:1:1 | In(NO₃)₃ | 0.050 | 1000 | 0.200 | 0.80 |
| | | | Ga(NO₃)₃ | | | | |
| | | | Zn(NO₃)₂ | | | | |
| 2.4 | Acetic Acid | 1:1:1 | In(NO₃)₃ | 0.050 | 1250 | 0.100 | 0.40 |
| | | | Ga(NO₃)₃ | | | | |
| | | | Zn(NO₃)₂ | | | | |
| 2.5 | Acetic Acid | 1:1:1 | In(NO₃)₃ | 0.050 | 750 | 0.215 | 0.86 |
| | | | Ga(NO₃)₃ | | | | |
| | | | Zn(NO₃)₂ | | | | |
| 2.6 | Acetic Acid | 1:1:1 | In(NO₃)₃ | 0.100 | 1000 | 0.160 | 0.64 |
| | | | Ga(NO₃)₃ | | | | |
| | | | Zn(NO₃)₂ | | | | |
| 2.7 | Acetic Acid | 1:1:1 | In(NO₃)₃ | 0.025 | 1000 | 0.150 | 0.60 |
| | | | Ga(NO₃)₃ | | | | |
| | | | Zn(NO₃)₂ | | | | |
| 2.8 | Acetic Acid | 1:1:1 | In(NO₃)₃ | 0.050 | 1000 | 0.250 | 1.00 |
| | | | Ga(NO₃)₃ | | | | |
| | | | Zn(NO₃)₂ | | | | |
| 2.9 | Acetic Acid | 1:1:1 | In(NO₃)₃ | 0.050 | 1000 | 0.300 | 1.20 |
| | | | Ga(NO₃)₃ | | | | |
| | | | Zn(NO₃)₂ | | | | |
| 2.10 | Acetic Acid | 1:1:1 | In(NO₃)₃ | 0.050 | 500 | 0.265 | 1.59 |
| | | | Ga(NO₃)₃ | | | | |
| | | | Zn(NO₃)₂ | | | | |
| 2.11 | Acetic Acid | 1:1:2 | In(NO₃)₃ | 0.050 | 1000 | 0.145 | 0.87 |
| | | | Ga(NO₃)₃ | | | | |
| | | | Zn(NO₃)₂ | | | | |
| 2.12 | Acetic Acid | 1:1:3 | In(NO₃)₃ | 0.050 | 1000 | 0.150 | 0.90 |
| | | | Ga(NO₃)₃ | | | | |
| | | | Zn(NO₃)₂ | | | | |
| 2.13 | Methanol | 1:1:1 | In(NO₃)₃ | 0.050 | 500 | 0.500 | 3.00 |
| | | | Ga(NO₃)₃ | | | | |
| | | | Zn(NO₃)₂ | | | | |
| 2.14 | Propionic Acid | 1:1:1 | In(NO₃)₃ | 0.050 | 1000 | 0.150 | 0.90 |
| | | | Ga(NO₃)₃ | | | | |
| | | | Zn(NO₃)₂ | | | | |
| 2.15 | Water | 1:1:1 | In(NO₃)₃ | 0.050 | 1000 | 0.105 | 0.63 |
| | | | Ga(NO₃)₃ | | | | |
| | | | Zn(NO₃)₂ | | | | |
| 2.16 | Xylene | 1:1:1 | In(acac)₃ | 0.050 | 600 | 0.150 | 0.90 |
| | | | Ga(acac)₃ | | | | |
| | | | Zn(acac)₂ | | | | |
| 2.17 | Xylene | 1:1:1 | In(acac)₃ | 0.100 | 600 | 0.150 | 0.90 |
| | | | Ga(acac)₃ | | | | |
| | | | Zn(acac)₂ | | | | |
| 2.18 | Xylene | 1:1:1 | In(acac)₃ | 0.050 | 300 | 0.360 | 2.16 |
| | | | Ga(acac)₃ | | | | |
| | | | Zn(acac)₂ | | | | |
| 2.19 | Isopropanol | 1:1:1 | In(acac)₃ | 0.050 | 600 | 0.290 | 1.74 |
| | | | Ga(acac)₃ | | | | |
| | | | Zn(acac)₂ | | | | |
| 2.20 | Acetic Acid | 1:1:1 | In(NO₃)₃ | 0.050 | 1000 | 0.100 | 0.60 |
| | | | Ga(NO₃)₃ | | | | |
| | | | Zn(NO₃)₂ | | | | |
| 2.21 | Acetic Acid | 1:1:1 | In(NO₃)₃ | 0.050 | 1000 | 0.150 | 0.90 |
| | | | Ga(NO₃)₃ | | | | |
| | | | Zn(NO₃)₂ | | | | |
| 2.22 | Acetic Acid | 1:1:1 | In(NO₃)₃ | 0.050 | 1000 | 0.200 | 1.20 |
| | | | Ga(NO₃)₃ | | | | |
| | | | Zn(NO₃)₂ | | | | |
| 2.23 | Acetic Acid | 1:1:1 | In(NO₃)₃ | 0.500 | 500 | 0.200 | 1.20 |
| | | | Ga(NO₃)₃ | | | | |
| | | | Zn(NO₃)₂ | | | | |
| 2.24 | Xylene | 2:1:2 | In(acac)₃ | 0.050 | 600 | 0.150 | 0.90 |
| | | | Ga(acac)₃ | | | | |
| | | | Zn(acac)₂ | | | | |
| 2.25 | Ethylene glycol | 1:1:1 | In(NO₃)₃ | 0.050 | 1000 | 0.150 | 0.90 |
| | | | Ga(NO₃)₃ | | | | |
| | | | Zn(NO₃)₂ | | | | |

## Claims

1. A process for producing particles comprising
(a) atomizing a liquid mixture comprising an In-comprising compound, a Ga-comprising compound and an M-comprising compound, wherein M is Zn or Sn,
(b) heating the atomized liquid to a temperature of at least 800 °C.

2. The process according to claim 1 wherein the In-comprising compound, the Ga-comprising compound and the M-comprising compound cross a combustion zone.

3. The process according to claim 1 or 2 wherein the heating takes at maximum 0.1 s.

4. The process according to any of the claims 1 to 3 wherein the liquid comprises a flammable solvent.

5. The process according to claim 4 wherein the solvent has a boiling point at normal pressure of at least 100 °C.

6. The process according to any of the claims 1 to 5 wherein the metal concentration in the liquid mixture is 0.1 to 1 mol/l at normal conditions.

7. Particles comprising In, Ga, a metal which is Zn or Sn, and O wherein the particles have a particle size of 1 to 100 nm and a BET surface area of at least 50 m²/g.

8. The particles according to claim 7 wherein the particles comprise a compound of general formula (I):
InₐGa_{b}M_{c}Oₓ (I)
wherein M is Zn or Sn,
a = 0.1 to 1,
b = 0.1 to 1,
c = 0.1 to 1,
x = 0.4 to 4,
and the compound of general formula (I) is neutrally charged.

9. The particles according to claim 8 or 9 wherein the particles are amorphous or microcrystalline.

10. The particles according to any of the claims 7 to 9 wherein the particles bear OH groups on their surface.

11. The particles according to any of the claims 7 to 10 wherein the particles are non-spherical.

12. An ink comprising the particles according to any of the claims 7 to 10.

13. Use of the particles according to any of the claims 7 to 10 for the preparation of an electronic device.

14. An electronic device comprising the particles according to any of the claims 7 to 10.

15. The electronic device according to claim 14 wherein the electronic device is a transistor.
